# EUROPEAN PATENT APPLICATION

(11) **EP 4 113 251 A1**
(43) Date of publication of application: **04.01.2023**
(21) Application number: 21182902.3
(22) Date of filing: 30.06.2021
(51) Int. Cl.: G06F 3/01

(54) **CALIBRATION METHOD OF A SYSTEM COMPRISING AN EYE TRACKING DEVICE AND A COMPUTING DEVICE COMPRISING ONE OR MULTIPLE SCREENS**

(71) Applicant: Eyeware Tech SA, 1920 Martigny (CH)
(72) Inventor: Funes Mora, Kenneth Alberto, 1018 Lausanne (CH); Kovacik, Alojz, 1920 Martigny (CH); Prenaj, Bastjan, 9240 Uzwil (CH)
(74) Representative: P&TS SA (AG, Ltd.)

(57) **Abstract**

The present invention relates to a calibration method for a system (10) comprising an eye-tracking device (16) and a computing device (12) for capturing the gaze of a user (P) on at least one screen (13a; 13b) of the computing device. The calibration method comprises: a. displaying on one screen (13a; 13b) of the computing device (12) one or more specific patterns (20a; 20b; 20c; 20d) or arbitrary content; b. capturing with a camera (18) of the eye-tracking device (16) at least one image of said one or more specific patterns (20a; 20b; 20c; 20d) or said arbitrary content when said eye-tracking device is in an initial 3D pose (ECS₀); c. computing a 3D pose (SCS₀) of said one screen (13a; 13b) with respect to the eye-tracking device (16) at said initial 3D pose (ECS₀) as a function of said one or more specific patterns (20a; 20b; 20c; 20d) or said arbitrary content firstly defined in terms of pixel coordinates in the screen's display coordinate system (DCS), and secondly detected in the image coordinate system (ICS) of the camera (18) of the eye-tracking device (16) ; d. moving and placing the eye-tracking device (16) to a resting position convenient for a user (P) corresponding to a final 3D pose (ECS) of the eye-tracking device (16); and e. computing the final 3D pose (SCS) of said at least one screen (13a; 13b) with respect to the eye-tracking device coordinate system (ECS) when the eye-tracking device (16) is in said final 3D pose as a function of the 3D pose (SCS₀) of said at least one screen (13a, 13b) with respect to the eye-tracking device (16) at said initial 3D pose (ECS₀) and the final 3D pose (ECS) of the eye-tracking device (16).

## Description

### Field of the invention

The present invention relates to a method for calibration of a system comprising an eye tracking device and a computing device as a function of the position of the eye-tracking device with respect to one or multiple screens. This method enables capturing the gaze of a user on one or multiple screens of the computing device.

### Description of related art

Eye tracking has been solved by making use of multiple strategies. An eye tracking setup is generally composed of one or multiple cameras that capture the face and/or eyes and, in most common applications, with one or multiple screens such as a laptop screen or desktop screen. Most systems require to know what the positioning of the physical screens is with respect to the eye-tracking device configured to track the movement of the eyes of a user.

This can be problematic because the screens themselves are not in the field of view of the one or more cameras, making it difficult to infer automatically where the screens are with respect to the cameras. To solve this problem, commercial eye tracking solutions introduce UI/UX strategies that guide the user on how exactly to mount the eye-tracking device on each of the screens. Some systems even use one eye-tracking device per screen.

The above solutions are tedious procedures to put in place which require complicated setups of an eye-tracking device with respect to the screen of the computing device, in particular, when a free positioning of the eye-tracking device is desirable.

There is therefore a need for calibration between an eye-tracking device with respect to one or multiple screens

Automated calibration methods between an eye-tracking device and a camera already exist.

For example, US 2020174560 discloses a calibration method for a three-dimensional augmented reality and apparatus thereof. The calibration method includes determining a first conversion parameter representing a relationship between a coordinate system of an eye-tracking camera and a coordinate system of a calibration camera by capturing a physical pattern using the eye-tracking camera and the calibration camera, and determining a second conversion parameter representing a relationship between a coordinate system of a virtual screen and the coordinate system of the calibration camera and a size parameter representing a size of the virtual screen by capturing a virtual pattern displayed on the virtual screen using the calibration camera.

The method according to US2020174560 therefore enables to accurately display a virtual object on a virtual screen at a point corresponding to a target position which intersects the gaze ray of the user tracked by the eye-tracking camera.

### Brief summary of the invention

An aim of the present invention is to provide an alternative method for an easy and quick setup for calibration of an eye tracking device as a function of the position of one or multiple screens irrespective of the position of the eye-tracking device relative to the screen or each screen.

According to the invention, this aim is achieved by means of a calibration method for a system comprising an eye-tracking device and a computing device for capturing the gaze of a user on at least one screen of the computing device, The calibration method comprises: a. displaying on one screen of the computing device one or more specific patterns or arbitrary content; b. capturing with a camera of the eye-tracking device at least one image of said one or more specific patterns or said arbitrary content when said eye-tracking device is in an initial 3D pose ECS; c. computing a 3D pose SCSo of said one screen with respect to the eye-tracking device at said initial 3D pose ECSo as a function of said one or more specific patterns or said arbitrary content firstly defined in terms of pixel coordinates in the screen's display coordinate system DCS, and secondly detected in the image coordinate system ICS of the camera 18 of the eye-tracking device ; d. moving and placing the eye-tracking device to a resting position convenient for a user corresponding to a final 3D pose ECS of the eye-tracking device; and e. computing the final 3D pose SCS of said at least one screen with respect to the eye-tracking device coordinate system ECS when the eye-tracking device is in said final 3D pose as a function of the 3D pose SCS₀ of said at least one screen with respect to the eye-tracking device at said initial 3D pose ECSo and the final 3D pose ECS of the eye-tracking device. Capturing the gaze of a user on the screen of the computing device comprises: i. retrieving a gaze ray of the user with the eye-tracking device defined in the coordinate system ECS of said eye-tracking device, and ii. intersecting the gaze ray of the user with said at least one screen of the computing device, as a function of the ECS and SCS parameters, to capture the gaze-on-screen.

In an embodiment, step c. of the calibration method further comprises: i) using mechanical parameters describing the resolution and/or geometry of said at least one screen of the computing device to establish a set of 3D pattern points from the corresponding pixel coordinates in the screen's display coordinate system DCS of the one or more specific patterns or said arbitrary content, and ii) computing the initial 3D pose SCSo by minimizing the reprojection error of the set of pattern points against their corresponding detections in the image coordinate system ICS of the camera of the eye-tracking device.

In an embodiment, the eye-tracking device comprises a depth-camera and/or multiple cameras. Pattern points of said one or more specific patterns or arbitrary content on said at least one screen are measured directly by the depth-camera or by said multiple cameras using a stereo triangulation computer vision technique. Pattern point thus do not depend on knowledge of mechanical parameters describing the geometry of said at least one screen of the computing device.

In an embodiment, said final 3D pose ECS of the eye-tracking device under step e. of the calibration method is retrieved by a 3D pose tracking algorithm which estimates 3D changing poses of the eye-tracking device while being moved from its initial 3D position ECSo to its final 3D position ECs.

In an embodiment, the 3D pose tracking algorithm uses visual odometry to estimate the 3D changing poses of the eye-tracking device while being moved from its initial 3D position ECSo to its final 3D position ECS.

In an embodiment, the eye-tracking device further comprises an Inertial Measurement Unit (IMU). The 3D pose tracking algorithm uses measurement of the IMU to estimate the 3D changing poses of the eye-tracking device while being moved from its initial position ECS₀ to its final 3D position ECS.

In an embodiment, the eye-tracking device integrates a self-localisation algorithm configured to recognize features of the environment captured by the eye-tracking device. A model of said environment is generated based on the video stream retrieved from steps b. and d. of the calibration method. During step e. of the calibration method the final 3D pose ECS of the eye-tracking device is retrieved by said self-localisation algorithm based on said model.

In an embodiment, the calibration method further comprises the step of scanning with the eye-tracking device the environment comprising said at least one screen and preferably the place where the eye tracking device is to be positioned in its final 3D pose to create a better model of said environment.

In an embodiment, a record is made of a calibration model comprising: i) 3D pose SCS₀ of said at least one screen with respect to the eye-tracking device at said initial 3D pose ECSo, and ii) said initial 3D pose ECSo of the eye-tracking device in relation to the model of the environment.

In an embodiment, the calibration method further comprises i) retrieving the data from said recorded calibration model, and ii) retrieving the final 3D pose ECS of the eye-tracking device using said self-localisation algorithm based on said environment model for recalibrating the position of the final 3D pose of the eye-tracking device with respect to the 3D pose SCS₀ of said at least one screen.

In an embodiment, said arbitrary content is captured and processed to detect and establish a set of interest points.

In an embodiment, said final 3D pose ECS of the eye-tracking device under step e. of the calibration method is retrieved comprising a further step consisting in i) capturing with a camera of the eye-tracking device at least one image of the area comprising the resting position location; ii) computing a 3D pose of the resting position location, and iii) using said 3D pose of the resting position location to compute said final 3D pose ECS of the eye-tracking device.

In an embodiment the eye tracking device is a mobile phone or a tablet.

In an embodiment, a user interface, displayed on the screen of said mobile device or tablet, is used to guide the user through at least steps b. and d. of the calibration method.

Another aspect of the invention relates to a tangible computer product containing program code for causing a processor to execute the method as described above when said code is executed on said processor.

### Brief Description of the Drawings

The invention will be better understood with the aid of the description of an embodiment given by way of example and illustrated by the figures, in which:
- Figure 1 schematically shows a system for capturing the gaze of a user on a screen of a computing device using an eye-tracking device according to an embodiment of the invention;
- Figure 2a) shows the computing device displaying a specific pattern on screen with a user capturing an image of said pattern using a camera of the eye tracking device according to an embodiment of the invention;
- Figure 2b) schematically shows the content of the screen referred to the display coordinate system DCS;
- Figure 2c) schematically shows the image captured by the eye tracking device, wherein the specific pattern has been imaged;
- Figure 3 schematically shows an explanation view for establishing 2D-3D correspondence points been points in two distinct coordinate systems;
- Figure 4 schematically shows a computing device with multiple screens, each displaying several patterns at different locations according to an embodiment of the invention;
- Figure 5 shows different examples of pixelated patterns to be displayed on a screen to calculate the 3D pose of screen with respect to the camera of the eye-tracking device;
- Figure 6 schematically shows the step of moving and placing the eye-tracking device to a resting position convenient the user;
- Figure 7 shows a perspective view of a stand where the eye-tracking device is to be placed which defines the final 3D pose of the eye-tracking device;
- Figure 8 shows features of the environment of the eye-tracking device while it is being moved in order to calculate in real-time the 3D pose of the eye-tracking device until it reaches its final 3D pose;
- Figure 9 shows an estimated trajectory versus an actual camera trajectory of the eye-tracking device when the eye-tracking device is moved from its initial pose to its final pose, and
- Figure 10 shows an environment captured by a camera of the eye tracking device showing features used by self-localization algorithms to locate the eye-tracking device.

### Detailed Description of different embodiments of the Invention

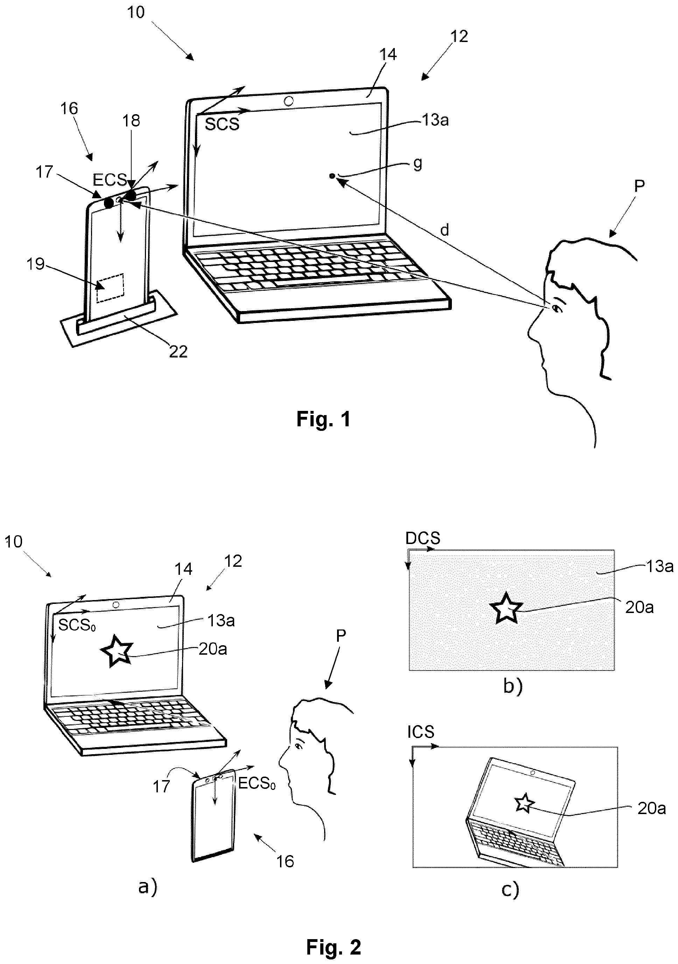

Figure 1 schematically shows an example of a system 10 for capturing the gaze g of a user P on a screen 13a of a computing device 12 using the eye-tracking device 16 which may advantageously be a smartphone. In a preferred embodiment, the eye-tracking device 16 outputs a gaze ray d, also known as the line-of-sight, whose intersection on the screen 13a generates the gaze g, also known as the point of regard. To compute this intersection, as the gaze ray d is first defined with respect to the eye-tracking device coordinate system ECS. The system therefore needs to know the 3D pose of the screen SCS, defined with respect to the-eye tracking device. Note that the world referential may be ECS itself, or another arbitrary frame. What is relevant when interpreting the herein described embodiments, is to interpret the screen pose SCS as in relation to the eye-tracking device's pose ECS.

In a preferred embodiment, the smartphone 16, as shown for example in Figure 1, comprises an RGB camera 17 as well as a depth-sensing camera 18 such as the TrueDepth^{®} camera of the IPhone^{®}. In another embodiment, the device comprises one or multiple infrared cameras as an alternative or complementary to the RGB camera. Such infrared data may also be the amplitude data from time-of-flight sensors. In another non-illustrated embodiment, the mobile device 16 may comprise dual or multiple cameras, without any depth-sensing camera, that can together work as a depth sensor through stereo triangulation. Cameras of one or different types could indeed be mixed. The resolution, type and focal of different cameras may vary.

In an embodiment, the eye tracking device 16 is a dedicated hardware with protocols and synchronization with the computing device to enable the display of specific patterns 20a, 20b, 20c, 20d or the retrieval of arbitrary data generated by the computing device, whereas the implementation of the calibration method utilizes processing units of said eye-tracking device. In another non-illustrated embodiment, the eye-tracking device functionality is distributed between the eye-tracking device and the computing device, for example, the eye-tracking device consisting only of an external webcam connected to the computing device which internally executes the eye-tracking functionality by processing the video stream from said external webcam.

The gaze estimate g of the user may be obtained by different methods. For example, the gaze of the user may be acquired by retrieving an input image and a reference image of an eye of the user and processing the input image and the reference image to estimate a gaze difference between the gaze of the eye within the input image and the gaze of the eye within the reference image. The gaze of the user is retrieved using the estimated gaze difference and the known gaze of the reference image. This procedure is disclosed in detail in WO2020/044180, the content of which is hereby incorporated by reference. In another example, the gaze of the user may be acquired by comparing an image geometric model with at least one image segmentation map generated from one input image observation corresponding to an image of the user's eye and iteratively modifying at least one parameter in the set of geometric parameters of the image geometric model to generate a new image geometric model of a user's eye until a model correspondence value reaches the optimal value. This procedure is disclosed in detail in WO2020/208494, the content of which is hereby incorporated by reference. Other methods for gaze estimation are disclosed in detail for example in WO2014/146199 and WO2015/192879. Yet other methods, such as those based on pupil-centre-corneal-reflection (PCCR) may also be suitable to retrieve the gaze estimate g, preferably if provided as a 3d ray.

Figure 2 schematically shows an example of the setup and available information to compute an initial 3D pose SCS0 of a screen 13a using the eye-tracking device 16 camera 17 and an on-screen specific pattern 20a, according to an embodiment. In Figure 2a), the computing device 12 is configured to display a specific pattern 20a on screen 13a. The user P then uses a camera 17 of the eye-tracking device to capture an image of the computing device screen 13a content and therefore of the specific pattern 20a. Figure 2b) shows the content of the screen referred to the display coordinate system DCS, which is defined in pixel coordinates and matching the physical pixel resolution of the display. In an embodiment, DCS and the screen content may instead be referring to logical pixels, in case of changes of resolution of the device. Figure 2c) schematically shows the image captured by the eye-tracking device, wherein the specific pattern 20a has been imaged, and its position can be defined in relation to the image coordinate system ICS.

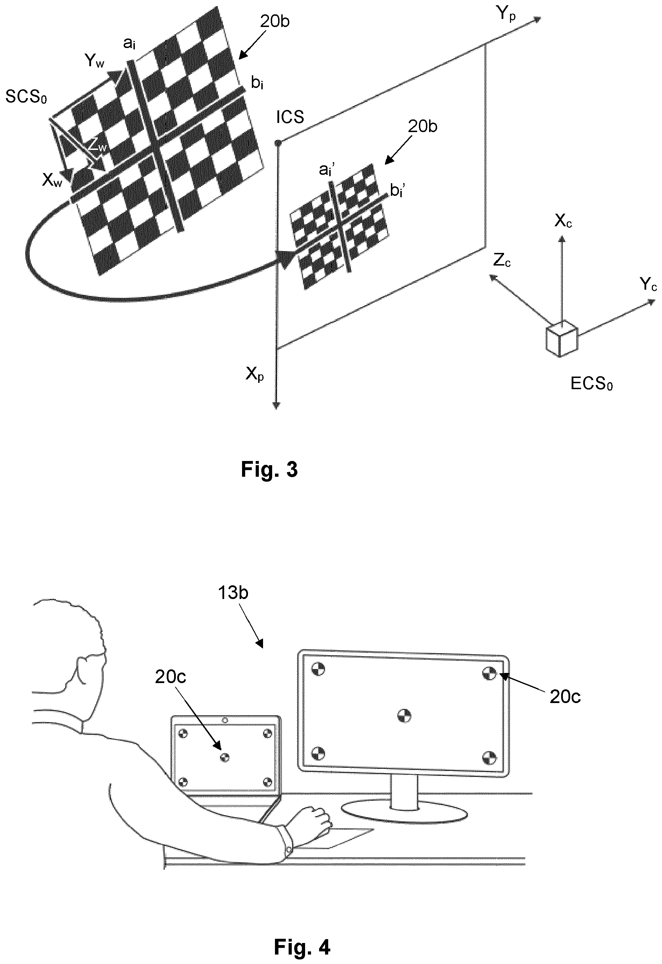

Figure 3 schematically shows an example of determining an initial 3D pose SCS₀ of a screen 13a using the eye-tracking device camera and an on-screen specific pattern 20b. A specific pattern 20b is displayed on the screen which, by knowing the physical dimensions of the screen and the pixel size of the pattern itself, a set of 3D points {aᵢ, bᵢ} of the pattern can be established with respect to the screen reference frame SCSo. Assuming the pattern is captured by a camera 17 of the eye-tracking device 16 of Figure 2, a detection algorithm can be used to retrieve the corresponding points as a set of 2D points {aᵢ', bᵢ'} defined in relation to the image coordinate system ICS. This process thus defines a set of 2D-3D correspondences between the detected markers in the eye-tracker camera coordinate system, which can then be used to find the screen pose SCS₀ by minimizing the reprojection error. As an example, the correspondences can be fed into the Perspective-n-Point (PnP) algorithm to estimate the marker's 6DoF pose, allowing to infer the exact screen pose. To detect the markers in the eye-tracker camera systems, multiple computer vision algorithms can be used. As an example, a Harris corner detection algorithm, together with spatial constraints known a priori, such as the number of points to be detected, can be used. In another embodiment, a neural network can be used to jointly output per pattern identifier-specific classifiers and their 2D point locations. Other algorithms can be then used to further fine-tune such 2D positions to improve the 2D locations to sub-pixel accuracy, as an example another neural network.

Figure 4 schematically shows an embodiment consisting of a computing device with multiple screens 13b, each displaying different patterns 20c at different locations. Similarly, those patterns 20c can then be captured by a camera of the eye-tracking device and used to retrieve the initial pose SCS₀ of the screens, either jointly or separately, assuming the algorithm is able to distinguish which set of patterns is displayed by each of the screens and thus determine a different SCS₀ per screen. The patterns on the said one or more screens are observed by the eye-tracking device, preferably a smartphone with available back and frontal cameras.

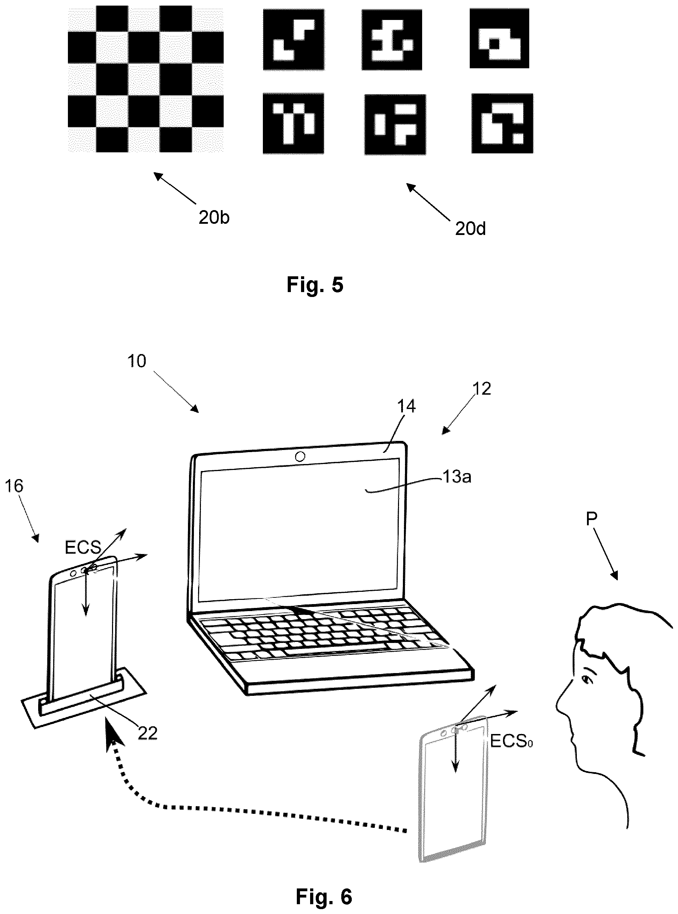

Figure 5 shows additional examples of patterns 20b, 20d to be displayed on the said one or multiple screens 13a; 13b (Figures 2 and 4) and used to calculate the initial relative 3D pose of the one or multiple screens with respect to the camera of the eye-tracking device, before the user places the eye-tracking device into a resting position convenient to the user. Such patterns are computer-vision-friendly 2D patterns that are unique and have enough points for 6DoF pose estimation as fiducials or markers. Preferred patterns would be Chessboard, ArUco or ChArUco markers or their derivatives.

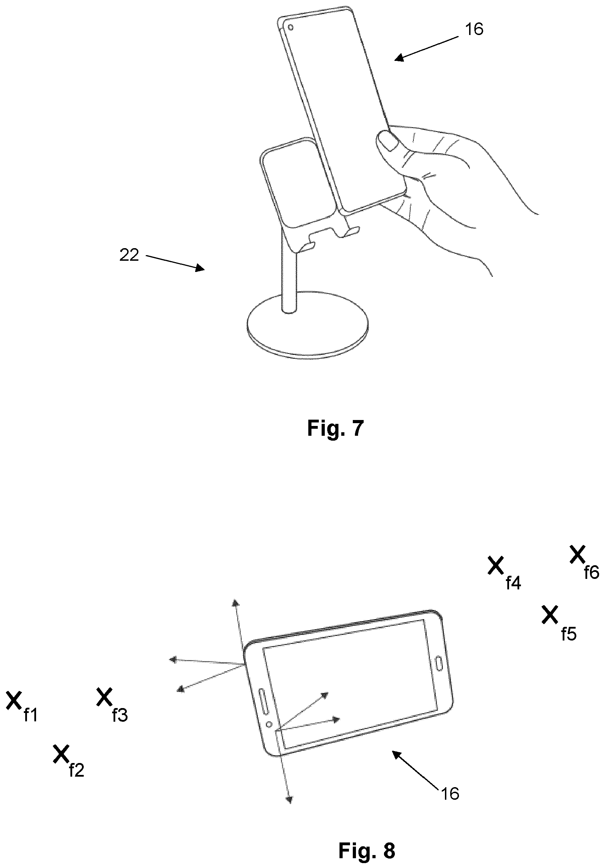

Figure 6 shows the step of moving and placing the eye-tracking device 16 to a resting position convenient the user P. After the user executes this task, the system can compute the pose ECS of the eye-tracking device 16, from the initially retrieved pose ECS₀ for the eye-tracking device. In a preferred embodiment, computing ECS from the initially retrieved pose ECSo assumes the eye-tracking device is able to automatically compute the 3D trajectory that the device took as the user was placing it in its rest position. Figure 7 shows an example of an embodiment, being a perspective view of a stand 22 where the eye-tracking device 16 is to be placed as a resting position, preferred by a user.

Figure 8 shows an example of an embodiment, where the eye-tracking device is a mobile phone 16 whose front and back cameras are used to detect arbitrary features f1, f2, f3, f4, f5, f6 of the environment, while the device is being moved or the environment is being explicitly scanned. Such features can then be used by computer vision algorithms to compute pose changes (visual odometry), or to directly compute the position of the device with respect to the environment (self-localization). Such functionality is common in augmented reality applications.

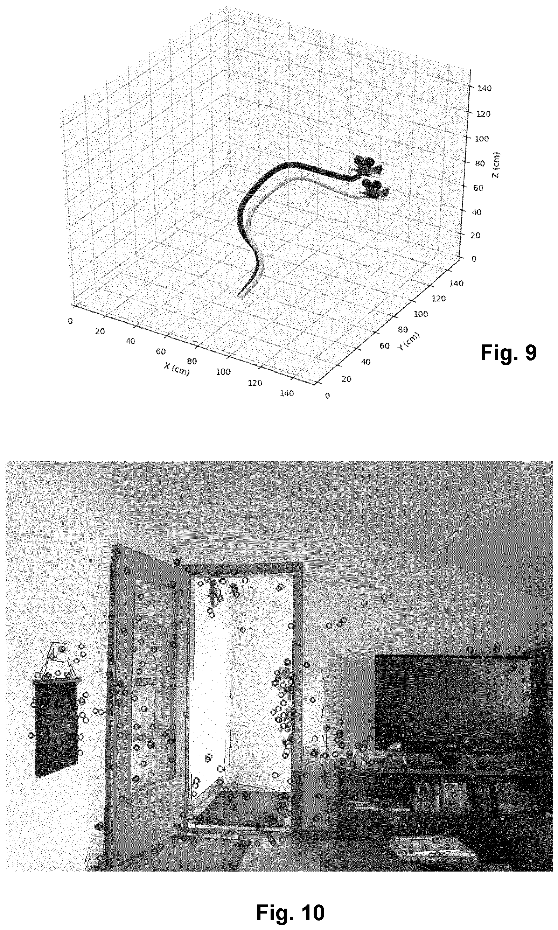

Figure 9 shows an example of an actual versus estimated trajectory of the eye-tracking device when the eye-tracking device is moved from its initial pose, where its relative position to the said one or more screens is first established all the way to the final pose. Such estimated trajectory can differ from the actual trajectory, which can lead to an inaccurate estimate of the eye-tracker relative position to the said one or multiple screens. Such errors can be reduced by combining different sources of information, such as visual odometry from one or multiple sensors, depth sensors, IMUs, meticulous scanning processes, or guiding the user into minimizing the time between the step of retrieving initial eye-tracking device pose ECS₀ and when the device is placed in its rest position ECS, amongst others. This error can also further propagate into reduced gaze-tracker accuracy. Effect of such inaccurate estimation can be reduced using further gaze-tracker calibration methods, applied after the final gaze tracker position is established. Example of such a method is showing several calibration points on screens and using them as ground truth for establishing user specific gaze parameters.

Figure 10 shows examples of features that can be retrieved and tracked to build a model of the environment according to one embodiment of the present invention. Such features can be used by self-localization or SLAM algorithms to locate the eye-tracking device either while being moved from its initial pose to its final (resting) pose or directly in the resting pose which is convenient for the user. The input for such algorithms can be the front or back camera of the eye-tracking device.

In an embodiment, the user can be guided to ensure suitable conditions are achieved to facilitate the detection of features from the environment, or the detection of points on the screen. Such conditions can help the algorithms work as optimally as they could, for example, could be increased light, reduced effects of direct light, changing location of the said one or more screens, such that better features are captured while moving the eye-tracking device using its cameras.

In an embodiment, environment features are used as an input to a real-time or near real-time algorithm which tracks the changing 3D pose of the eye-tracking device relative to the said one or multiple screens until the resting or final 3D pose is reached and confirmed by the user manually or established by the system automatically. Examples of such features would be corners, lines or other detections commonly used by camera localization techniques or in visual SLAM, as in the example depicted in Figure 10. The process of retrieving the changes in pose of a device through visual features is typically called visual odometry.

In an embodiment, other sensors can be used to compute the changes of pose, such as an inertial measurement unit (IMU) 19 integrated in the mobile phone 16, as shown in Figure 1, that provides absolute or differential signals about the 3D degrees of freedom of the device. The accumulation of pose changes can therefore be used to establish the rest position of the device ECS with respect to its initial 3D pose ECS₀.

In an embodiment, odometry can combine signals from different modalities such as visual features (visual odometry) as well as the output of an IMU. Not all measured features contribute to accurate localization during the estimation process, thus it is sensible to utilize only those that do. A set of methods can be used to select a subset of features that are of high utility. Some readily available utilities, such as Apple's ARKit, already provide off-the-shelf functionality for self-localization and pose tracking that combines different such modalities.

In an embodiment, the eye-tracking device 16 comprises a depth sensor. A depth sensor can then be used in different steps of the invention. In an embodiment, the depth sensor is used to retrieve the depth of points of the 2D correspondences {aᵢ', bᵢ'}, originally defined in relation to the image coordinate system ICS. Based on said depth information, and using the camera pin-hole with its respective intrinsics, said 2D correspondences {aᵢ', bᵢ'}, can be transformed into a set of 3D points. From the set of back-projected 3D points, either the screen physical dimensions can be computed from their direct measurements and removing the need to know a set of screen mechanical parameters (resolution, physical size) in advance or, the initial 3D pose of a screen SCSo can be computed directly by establishing 3D to 3D correspondences.

In an embodiment, computing the initial 3D pose of a screen SCSo can be facilitated by recognizing the borders of the screen which typically have a rectangular shape. This can be achieved by means of computer vision techniques such as a Hough transform voting scheme in the image coordinate system ICS of an eye tracker camera. In another embodiment, the eye-tracking device may further comprise a depth sensor, helping to facilitate the screen detection, which is a bounded rectangular plane in the depth domain.

In an embodiment, the step of computing the resting pose of the eye-tracking device also comprises the step of capturing features on the rest location where the eye-tracking device 16 will be placed by the user, using a camera of said eye-tracking device. In an embodiment, a dedicated stand 22 is enhanced with specific patterns designed to facilitate its recognition and further computation of the stands' 3D pose by minimizing reprojection errors, like in the Perspective-n-Point (PnP) algorithm, assuming the physical dimensions of the stand 22 are available. This approach therefore follows the same algorithmic strategy as retrieving the initial 3D pose of a screen SCSo. In a preferred embodiment, depth sensors or stereo cameras are used to facilitate computing the position of the dedicated stand. In an embodiment, the method can account for variable ways in which the user may place the eye-tracking device on the stand, such as querying the user by means of a user interface to provide more hints on the device orientation, or shifts in available directions. This can be also obtained in an automated fashion using data available from IMU sensors if present in the eye-tracking device.

In an embodiment, where the eye-tracking device stand 22 is automatically discovered, more possible detections resembling eye-tracking device stands can be discovered. One of them can be chosen automatically by the system, based on predefined dimensions or characteristics. Or the user can be queried to choose one of the detections.

In an embodiment, after the eye-tracking device is placed, the user either manually confirms that the placement has been finalized, or the system automatically detects the final placement based on rate of change of the relative pose to the said one or more screens. Other signals can be used to automatically detect the final position, such as change of measurements coming from an inertial measurement unit (IMU) or change of outputs coming from a set of computer vision algorithms such as SLAM or optical flow.

In an embodiment, instead of using specific patterns and displaying them on the screen of the computing device, the system can display arbitrary content, such as video, operating system windows, different programs, etc. In such approach, interest features can be retrieved to establish the 3D points {aᵢ, bᵢ} by means of computer vision algorithms that either detects interest points automatically, and finds their correspondences {a'ᵢ, b'ᵢ} in the image coordinate system ICS of the camera of the eye-tracking device 16, or by using algorithms which directly establish sparse or dense correspondences between the screen content and the image captured by the eye-tracking device. The screen content can be first retrieved using a screen capture software or API. Multiple algorithms exist to establish said correspondences, many of which were designed for stereo cameras correspondence matching. Such an approach may be beneficial to avoid disrupting the content in which the user may be engaged with.

ln a preferred embodiment the initial pose of the screen SCSO is computed from multiple video frames from the video stream captured by the eye-tracking device, either assuming that the eye-tracking device is fully static, when located at ECSo, or that small pose changes are detected and tracked while the user scans the screen and thus helping to SCSO from the average of the pose results over multiple frames. Such strategies typically deliver pose estimates with higher accuracy as they average over the time-instantaneous noise levels of features detection.

In an embodiment, instead of using patterns on one or more said screens or arbitrary content, infrared lights can be well positioned on the one or more said screens, acting as a pattern that can be detected by the eye-tracking device. This light can be emitted for limited time required to calibrate the eye-tracking device, or emitted constantly in the case of an eye-tracking device which requires continuous estimation of its position relative to screens.

In an embodiment, the user is instructed into placing the eye-tracking device 16 to a preferred position relative to one or multiple screens. This may be preferable as the system can lead the user into a position optimal for eye tracking, such as ensuring that the face and eyes of the user are centred in the frame captured by the eye-tracking camera or that the eyes are observed from a specific angle.

In an embodiment, the process of instructing the user where to place the eye-tracking device may comprise audio, visual or haptic cues. In an embodiment, a graphical 3D rendering of the eye-tracking device's desired position with respect to the screen, can be shown to the user in either the screen of the computing device or a screen on the eye-tracking device, in the case the eye-tracking device is a mobile phone. In an embodiment, the cues are specific sounds, speech, or vibrations which can change according to how close and in which direction the desired position is, with respect to the current position of the eye-tracking device, as the user is placing the eye tracking device in the final rest 3D position.

In an embodiment, the system computes a preferred positioning of the eye-tracking device to achieve the most optimal eye-tracking performance on the one or multiple screens before instructing the user where to place the eye-tracking device.

In an embodiment, the system decides the positioning of the eye-tracking device to achieve the most optimal eye-tracking performance and guides the user to such positioning as well as refining the user placed position using previously mentioned methods for establishing the eye-tracker position relative to the said one or multiple screens.

In an embodiment, machine learning models such as neural networks are used for the functioning of the eye-tracking device. The system establishes the most optimal eye-tracking device position based on the relative position of the eye-tracking device and one or more screens used during the training of these machine learning models. The system can recommend such positioning to the user, as an example by showing the optimal placement on the eye-tracking device's screen, as an overlay projection on the camera frames retrieved by the eye-tracking device with the means of augmented reality technology (AR).

In an embodiment, the dimensions of the said one or multiple screen planes can be established fully automatically using the images of the pixelated patterns on screen, captured by the eye-tracking device camera. These dimensions can be used for the functioning of the eye-tracking device when establishing the gaze position on the screen.

Further in an embodiment, the dimensions of the one or multiple screen planes can be established by the computing device connected to the screens, for example by querying such information from the monitor device drivers or other APIs meant for such queries.

In an embodiment, the physical dimensions of the one or multiple screen planes can be established by aligning the eye-tracking device with at least two corners of said one or multiple screens while tracking the position of the eye-tracking device in between such placements. Based on the physical dimensions of the eye-tracking device and the relative position between such corners established by difference between the eye-tracking device tracked positions, the screen's physical size can be computed. Such dimension estimations can be further refined using the knowledge about common physical dimensions of screens.

In an embodiment, the specific pattern on the screen can be shown in irregular intervals, not matching the screen refresh rate, making it visible to high frame rate cameras present on the eye-tracking device but not to a human.

In an embodiment, the user may use a camera of the eye-tracking device 16 to scan the environment. The areas of the environment to scan may comprise the one or multiple screens, the location where the computing device is positioned, the region surrounding the final rest position of the eye-tracking device or even the surrounding areas of the room, behind or in front of the devices, that may contain objects unrelated to said devices, as depicted in the example of Figure 10. Using such a scanning process, a collection of features f1, f2, f3, f4, f5, f6 and their 3D positions can then be established to build a model of the environment. Such a model can also or alternatively contain representations such as point clouds, mesh data and/or textures, from which a dynamic set of features can be extracted or compared as needed. In an embodiment, the user interface may guide the user into conducting the steps of scanning the environment as well as which areas to cover and in which order.

In an embodiment, the calibration method may maintain a record, either in memory, or in files, or in a cloud storage, that include the 3D pose SCSo of the screen with respect to the eye-tracking device at said initial 3D pose ECSo, the initial 3D pose ECSo of the eye-tracking device in relation to the model of the environment, and the model of the environment itself. In such a scenario, it can therefore be convenient to establish the world referential at the model of the environment.

In an embodiment, using calibration data including a model of the environment makes it possible to compute the pose of the rest 3D pose ECS of the eye-tracking device by computing its 3D pose with respect to the model of the environment using self-localization computer vision techniques. Then, using said computed pose at the final rest 3D pose ECS of the eye-tracking device, the pose difference can be computed with respect to the initial 3D pose ECSo of the eye-tracking device 16. Such difference of pose can then be applied to the initial 3D pose SCSo of the screen to compute the final 3D pose SCS of the screen when the eye- tracking device is placed in its final rest 3D pose. In an embodiment, this process can be conducted immediately after the user is conducting the full calibration process including the scanning of the screen, the environment, and placing the eye-tracking device in its final 3D rest pose. In another embodiment, it may be convenient for a user not to repeat the process of scanning the screen and the environment for a new eye tracking session but, instead, the system reloads the calibration data and, as the user places again the device in the final 3D position ECS, the same data and steps can then be used to recompute a new final 3D pose SCS of the screen. Such an approach makes the assumption that in normal conditions, a user is unlikely to move their screens within the room they are placed, such as in a desk.

In an embodiment, estimating the 3D pose of the eye-tracking device in relation to the model of the environment uses edge, landmark and object detection or other machine learning techniques to improve the robustness of the self-localization algorithms, for example identifying the most robustly detectable corners visible in the environment retrieved image data.

In an embodiment, movements of the eye-tracking device post-calibration can be detected and estimated again by continuously monitoring and recomputing the final 3D position ECS of the eye-tracking device with respect to a model of the environment. Such an approach should ideally be robust to movements of a single reference object in the model of the environment. In another embodiment, the signals of an IMU can be monitored to decide whether it should be necessary to trigger another re-computation process.

In an embodiment, the user may manually place markers, patterns, specific or arbitrary images into the field-of-view of the eye- tracking device to assure that a more robust model of the environment is achieved. This may be convenient in scenarios where the user does not have any behind except for a uniformly-coloured wall, which are known to be ambiguous referential for computer vision algorithms.

In an embodiment, the user interface may suggest the best possible end position of the eye-tracking device during the calibration phase, ensuring that interest points are clearly visible for later monitoring of movements of the eye-tracking device.

In an embodiment, the calibration method detects environments with low visibility and suggests improving the conditions for a better tracking of the environment, such as increasing the illumination of a room.

In an embodiment, the user interface for the calibration process uses sounds, vibrations or colours to indicate if the user is moving the eye-tracking device inappropriately, for example moving it too fast or not covering enough interest points, helping to improve the overall quality of the calibration.

In an embodiment, the system takes advantage of the results of the visual odometry, IMUs or depth sensors to detect and later indicate if the user moved the device out of range for the corresponding sensors to provide accurate data or generated a discontinuity in the calibration process in any other form and asks the user to restart calibration.

In an embodiment, the user interface highlights a set of interest points and suggests to the user to enhance recording of such interest points during the process of retrieving a model of the environment.

In an embodiment, the user positions the eye-tracking device so to have an at least a partial area of one of the screens in the field-of-view of one of the cameras of the eye-tracking device after placing it in its final position, making it possible to detect and potentially recalibrate in the scenario in which the screen position or the eye-tracking device position has changed. An embodiment may include a wide field of view camera on the eye-tracking device such that it is easier to capture more content of the screen after the user has placed the eye-tracking device in a rest position. In an embodiment, detecting these movements may further trigger a recalibration alert if a movement is detected by either the eye-tracking device or the screen.

In an embodiment, holding down a button of a phone or tablet is used to activate the SLAM/environment recording process and allows to pause and continue the recording during the calibration process.

In an embodiment, a computer product running the calibration process is an application running on a phone or tablet.

In an embodiment, a computer product running the user interface for the calibration process is an application on a phone or tablet.

In an embodiment, one or multiple screens have an attached IMU sensor, from which measurements can be used to detect change of the relative position between the screens and the eye-tracking device after the final position has been established.

In an embodiment, one or multiple screens have an attached camera or set of cameras, which can be used to determine a position change, which is used to indicate that recalibration of the eye-tracking device or its relative position to one or multiple screens is needed.

In an embodiment the user interface uses overlays or other visual guides and can request for input by the user to adjust detected features manually, such as corners of the tracked screen or screens, if some error is detected during the scanning process of the environment. Manual input by the user can generally be used to increase the accuracy during the calibration process, for example requesting a manual confirmation throughout the scanning process if overlays are correctly following the screen edges.

Various modifications and variations to the described embodiments of the invention will be apparent to those skilled in the art without departing from the scope of the invention as defined in the appended claims. For example, the eye-tracking device may be a device other than a mobile phone such as a stand-alone eye-tracking device with its own processing unit and a communication protocol allowing it to share video data or conduct partial calibration processes in its own processing units. Alternatively, the communication protocols are configured such that the interest points displayed on screen, mechanical parameters of the screen and other needed information are sent over to the eye-tracking device, which internally makes the necessary calibration computations.

## Claims

1. A calibration method for a system (10) comprising an eye-tracking device (16) and a computing device (12) for capturing the gaze of a user (P) on at least one screen (13a; 13b) of the computing device, wherein the calibration method comprises:
a. displaying on one screen (13a; 13b) of the computing device (12) one or more specific patterns (20a; 20b; 20c; 20d) or arbitrary content;
b. capturing with a camera (18) of the eye-tracking device (16) at least one image of said one or more specific patterns (20a; 20b; 20c; 20d) or said arbitrary content when said eye-tracking device is in an initial 3D pose (ECS₀);
c. computing a 3D pose (SCS₀) of said one screen (13a; 13b) with respect to the eye-tracking device (16) at said initial 3D pose (ECS₀) as a function of said one or more specific patterns (20a; 20b; 20c; 20d) or said arbitrary content firstly defined in terms of pixel coordinates in the screen's display coordinate system (DCS), and secondly detected in the image coordinate system (ICS) of the camera (18) of the eye-tracking device (16) ;
d. moving and placing the eye-tracking device (16) to a resting position convenient for a user (P) corresponding to a final 3D pose (ECS) of the eye-tracking device (16); and
e. computing the final 3D pose (SCS) of said at least one screen (13a; 13b) with respect to the eye-tracking device coordinate system (ECS) when the eye-tracking device (16) is in said final 3D pose as a function of the 3D pose (SCS₀) of said at least one screen (13a, 13b) with respect to the eye-tracking device (16) at said initial 3D pose (ECS₀) and the final 3D pose (ECS) of the eye-tracking device (16),
wherein, capturing the gaze (g) of a user (P) on the screen of the computing device comprises:
retrieving a gaze ray of the user (P) with the eye-tracking device defined in the coordinate system (ECS) of said eye-tracking device, and
intersecting the gaze ray (d) of the user (P) with said at least one screen (13a; 13b) of the computing device, as a function of the ECS and SCS parameters, to capture the gaze-on-screen (g).

2. The calibration method according to claim 1, wherein step c. further comprises:
using mechanical parameters describing the resolution and/or geometry of said at least one screen (13a; 13b) of the computing device (12) to establish a set of 3D pattern points {aᵢ, bᵢ} from the corresponding pixel coordinates in the screen's display coordinate system(DCS) of the one or more specific patterns ((20a; 20b; 20c; 20d) or said arbitrary content, and
computing the initial 3D pose (SCS₀) by minimizing the reprojection error of the set of pattern points {aᵢ, bᵢ}, against their corresponding detections {aᵢ', bᵢ'} in the image coordinate system (ICS) of the camera (18) of the eye-tracking device (16).

3. The calibration method according to claims 1 or 2, the eye-tracking device (16) comprising a depth-camera and/or multiple cameras, wherein pattern points {aᵢ, bᵢ} of said one or more specific patterns (20a; 20b; 20c; 20d) or arbitrary content on said at least one screen (13a; 13b) are measured directly by the depth-camera or by said multiple cameras using a stereo triangulation computer vision technique, and thus not depending on knowledge of mechanical parameters describing the geometry of said at least one screen (13a; 13b) of the computing device (12).

4. The calibration method according to any preceding claim, wherein said final 3D pose (ECS) of the eye-tracking device (16) under step e. is retrieved by a 3D pose tracking algorithm which estimates 3D changing poses of the eye-tracking device (16) while being moved from its initial 3D position (ECS₀) to its final 3D position (ECS).

5. The calibration method according to claim 4, wherein the 3D pose tracking algorithm uses visual odometry to estimate the 3D changing poses of the eye-tracking device (16) while being moved from its initial 3D position (ECS₀) to its final 3D position (ECS).

6. The calibration method according to any of claims 4 or 5, the eye-tracking device (16) further comprising an Inertial Measurement Unit (IMU), wherein the 3D pose tracking algorithm uses measurement of the IMU (19) to estimate the 3D changing poses of the eye-tracking device (16) while being moved from its initial position (ECS₀) to its final 3D position (ECS).

7. The calibration method according to any of the preceding claims, wherein the eye-tracking device (16) implements a self-localisation algorithm configured to recognize features (f1, f2, f3, f4, f5, f6) of the environment captured by the eye-tracking device (16), a model of said environment being generated based on the video stream retrieved from steps b. and d. of the calibration method, wherein during step e. of said calibration method the final 3D pose (ECS) of the eye-tracking device (16) is retrieved by said self-localisation algorithm based on said model.

8. The calibration method according to claim 7, further comprising the step of scanning with the eye-tracking device (16) the environment comprising said at least one screen (13a; 13b) and preferably the place where the eye tracking device (16) is to be positioned in its final 3D pose to create a better model of said environment.

9. The calibration method according to claim 8, wherein a record is made of a calibration model comprising:
3D pose (SCS₀) of said at least one screen (13a, 13b) with respect to the eye-tracking device (16) at said initial 3D pose (ECS₀),
said initial 3D pose (ECS₀) of the eye-tracking device (16) in relation to the model of the environment.

10. The calibration method according to claim 9, further comprising:
retrieving the data from said recorded calibration model,
retrieving the final 3D pose (ECS) of the eye-tracking device (16) using said self-localisation algorithm based on said environment model for recalibrating the position of the final 3D pose of the eye-tracking device (16) with respect to the 3D pose (SCS₀) of said at least one screen (13a, 13b).

11. The calibration method according to any preceding claim wherein said arbitrary content is captured and processed to detect and establish a set of interest points {aᵢ, bᵢ}.

12. The calibration method according to any preceding claim, wherein said final 3D pose (ECS) of the eye-tracking device under step e. is retrieved comprising a further step of:
capturing with a camera (18) of the eye-tracking device (16) at least one image of the area comprising the resting position location,
computing a 3D pose of the resting position location, and
using said 3D pose of the resting position location to compute said final 3D pose (ECS) of the eye-tracking device (16).

13. The calibration method according to any preceding claim wherein the eye tracking device (16) is a mobile phone or a tablet.

14. The calibration method according to any preceding claim, wherein a user interface, displayed on the screen of said mobile device or tablet, is used to guide the user through at least steps b. and d. of the calibration method.

15. A tangible computer product containing program code for causing a processor to execute the method of one of the claims 1 to 14 when said code is executed on said processor.
